# EUROPÄISCHE PATENTSCHRIFT

(11) **EP 0 897 057 B1**
(45) Veröffentlichungstag und Bekanntmachung des Hinweises auf die Patenterteilung: **05.03.2003**
(21) Anmeldenummer: 98110045.6
(22) Anmeldetag: 29.05.1998
(51) Int. Cl.: F02F 1/42

(54) **Vierventil-Zylinderkopf einer Brennkraftmaschine**
Four valve cylinderhead for an internal combustion engine
Culasse à quatre soupapes pour un moteur à combustion interne

(30) Priorität: 14.08.1997 DE 19735183
(43) Veröffentlichungstag der Anmeldung: 17.02.1999
(73) Patentinhaber: DEUTZ Aktiengesellschaft, 51063 Köln (DE)
(72) Erfinder: Kleinschmidt, Anton, 50321 Brühl (DE)

(56) Entgegenhaltungen:
- EP-A- 0 584 564
- EP-A- 0 693 619
- DE-A- 19 621 635
- DE-B- 1 292 444
- GB-A- 678 903
- US-A- 4 787 342

## Beschreibung

Die Erfindung betrifft eine Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf abgedeckten Zylinder unter Bildung eines Brennraums bewegbar ist, wobei in dem Zylinderkopf je Zylindereinheit zwei mit Einlaßkanälen verbundene Einlaßventile und zwei mit Auslaßkanälen versehene Auslaßventile sowie ein in den Brennraum mündendes Einspritzventil angeordnet sind.

Eine derartige Brennkraftmaschine ist aus der DE-OS 22 34 642 bekannt. Diese Brennkraftmaschine weist je Zylinder zwei Einlaßventile und zwei Auslaßventile auf, die jeweils auf gegenüberliegenden Längsseitenwänden der Brennkraftmaschine münden. Dabei sind die Einlaßventile einerseits und die Auslaßventile andererseits jeweils symmetrisch zueinander angeordnet und um einen Winkel von ca. 45° zu Längsachsen in Richtung der Kurbelwelle der Brennkraftmaschine verdreht. Dadurch ist die Brennkraftmaschine zwar an und für sich strömungsgünstig als Querstromzylinderkopf ausgebildet, wobei aber durch diese gewählte Ausbildung auch Nachteile, beispielsweise bezüglich des Anbaus von notwendigen Bauteilen wie beispielsweise der Einspritzleitungen ergeben. So ist es so, daß die Einspritzleitung nur koaxial zu dem Einspritzventil bzw. dem Einspritzventilhalter angeschlossen werden kann und dadurch zwangsläufig über den Zylinderkopf beziehungsweise über die Zylinderkopfabdeckhaube und außen entlang der Ansaugleitung oder der Abgasleitung verlegt werden muß. Weiterhin ist es so, daß bei Anbau eines Abgasturboladers die verdichtete Ladeluft über die Zylinderkopfabdeckhaube der Brennkraftmaschine auf die gegenüberliegende Brennkraftmaschinenlängsseite geführt werden muß. Alternativ ist es möglich, stirnseitig eine Verbindungsleitung vorzusehen, wobei diese Lösung aber zusätzlichen Bauraum in Längsrichtung der Brennkraftmaschine beansprucht.

Der Erfindung liegt die Aufgabe zugrunde, eine Brennkraftmaschine bereitzustellen, bei der die zuvor genannten Nachteile vermieden sind und die dabei einen fertigungstechnisch günstigen Aufbau ausweist.

Diese Aufgabe wird dadurch gelöst, daß die Auslaßkanäle auf einer Längsseitenwand und die Einlaßkanäle auf der oberen Deckfläche in einem der Längsseitenwand zugewandten Bereich des Zylinderkopfs münden. Diese Ausbildung hat den Vorteil, daß damit ähnlich günstige Strömungsverhältnisse wie bei einem Querstromzylinderkopf erreicht werden, wobei aber die Ansaugleitung und die Abgasleitung beide auf der gleichen Brennkraftmaschinenlängsseite, bezogen zu der Mittellängsebene durch die Brennkraftmaschine, angeordnet sind. Dadurch bleibt einerseits die gegenüberliegende Brennkraftmaschinenlängsseite für andere Anbauten vollkommen frei und die Ansaugleitung und die Abgasleitung können ggf. über einen Turbolader direkt verbunden werden. Auch bei Einsatz eines zusätzlichen Ladeluftwärmetauschers ergeben sich weitere vorteilhafte Gestaltungsmöglichkeiten und es braucht auch hier keine Leitung über den Zylinderkopf herübergeführt werden.

In Weiterbildung der Erfindung sind die Auslaßkanäle zumindest im Mündungsbereich auf der Längseitenwand zusammengeführt. Hierbei ist es so, daß an die Gasführung in den Auslaßkanälen keine besonderen Ansprüche gestellt werden. Wichtig ist hier nur, das heiße Abgas auf möglichst direktem und kurzem Wege aus dem Brennraum in die Abgasleitung zu führen, wobei die Aufheizung der umliegenden Bauteile möglichst gering sein soll.

In Weiterbildung der Erfindung münden die Einlaßkanäle eines Zylinders voneinander getrennt auf der oberen Deckfläche. Hierbei ist dann in weiterer Ausgestaltung vorgesehen, daß einer der Einlaßkanäle als Drallkanal und der andere Einlaßkanal als Füllkanal ausgebildet ist. Dadurch, daß die Kanäle getrennt auf der oberen Deckfläche münden, kann problemlos in zumindest jeweils einen der beiden Einlaßkanäle eines Zylinders eine Regelklappe eingesetzt sein, die je nach Betriebsbedingungen einen der Einlaßkanäle (insbesondere bei Teillast) vollständig oder zumindest teilweise verschließt.

In weiterer Ausgestaltung der Erfindung sind die Einlaßkanäle eines Zylinders durch eine Zylinderkopfschraubenpfeife getrennt. Dabei ist es so, daß der Drallkanal sich so um die Zylinderkopfschraubenpfeife herumschlengelt, daß durch diese im Grunde konstruktiv zwangsmäßig entstandene Gegebenheit der Drallverlauf des Kanals entsteht. Eine weitere erfindungsgemäße Lösung darin, daß der als Füllkanal ausgebildete Einlaßkanal eines ersten Zylinders oberhalb des Auslaßkanals des benachbarten Zylinders auf der oberen Deckfläche mündet. Dieser Einlaßkanal ist also außen - in Richtung zu der nächsten Zylindereinheit - um die eben erwähnte Zylinderkopfschraubenpfeife herumgeführt und mündet oberhalb des benachbarten Auslaßkanals auf der oberen Deckfläche. In diesem Bereich steht genügend Raum zur Verfügung, so daß bezüglich der Dimensionierung des Füllkanals keinerlei Beschränkungen bestehen.

Besonders vorteilhaft lassen sich die zuvor geschilderten Vorteile dann erreichen, wenn die Ventilschaftführungen der Einlaßventile und der Auslaßventile in parallelen Ebenen angeordnet sind, die vorzugsweise 30° gedreht zu einer Querebene durch den Zylinderkopf angeordnet sind. Dadurch lassen sich insgesamt sehr kurze Auslaßkanäle realisieren, wobei der Auslaßkanal eines Auslaßventils quasi auf kürzestem Wege zu einer Zylinderkopflängsseitenwand geführt wird und der Auslaßkanal zu dem zweiten Auslaßventil im Grunde in einer geradlinigen Verlängerung des ersten Kanals besteht. Das heiße Abgas strömt also mit den geringstmöglichen Umlenkungen, die besonders kritisch bezüglich des Wärmeübergangs sind, in die Abgasleitung. Dabei ist in weiterer Ausgestaltung vorgesehen, daß gerade in diesen Bereichen zwischen den Einlaßkanälen und Auslaßkanälen zumindest ein Kühlmittelraum vorgesehen ist.

In Weiterbildung der Erfindung ist das Einspritzventil mit einer zumindest angenähert quer zu der Einspritzventillängsachse angeordneten Einspritzleitung verbindbar, die durch einen Kanal in dem Zylinderkopf geführt ist, der auf der zu den Mündungen der Auslaßkanäle gegenüberliegenden Längsseitenwand mündet. Diese Ausbildung ermöglicht eine äußerst kurze Einspritzleitung, insbesondere in Verbindung mit Hochdruckpumpenelementen, die in zumindest in der Nähe der Trennfuge zwischen dem Kurbelgehäuse und dem Zylinderkopf in das Kurbelgehäuse, zugehörig zu jedem einzelnen Zylinder, eingesetzt sind. Dabei ist der Kanal etwa um den gleichen Winkel wie die Ventilschaftführungen gedreht in den Zylinderkopf eingelassen. Dadurch kann dieser Kanal zwischen den Ventilschaftführungen eines Einlaßventils sowie zwischen den Zylinderkopfschrauben und eines Auslaßventils herausgeführt werden.

Weitere vorteilhafte Ausgestaltungen der Erfindung sind der Zeichnungsbeschreibung zu entnehmen, in der ein Ausführungsbeispiel der Erfindung näher beschrieben ist.

Es zeigen:
- Fig. 1:: einen Querschnitt durch einen erfindungsgemäßen Zylinderkopf mit aufgesetzter Zylinderkopfhaube und
- Fig. 2:: einen Höhenschnitt durch den Zylinderkopf im Bereich zweier nebeneinanderliegender Zylinder.

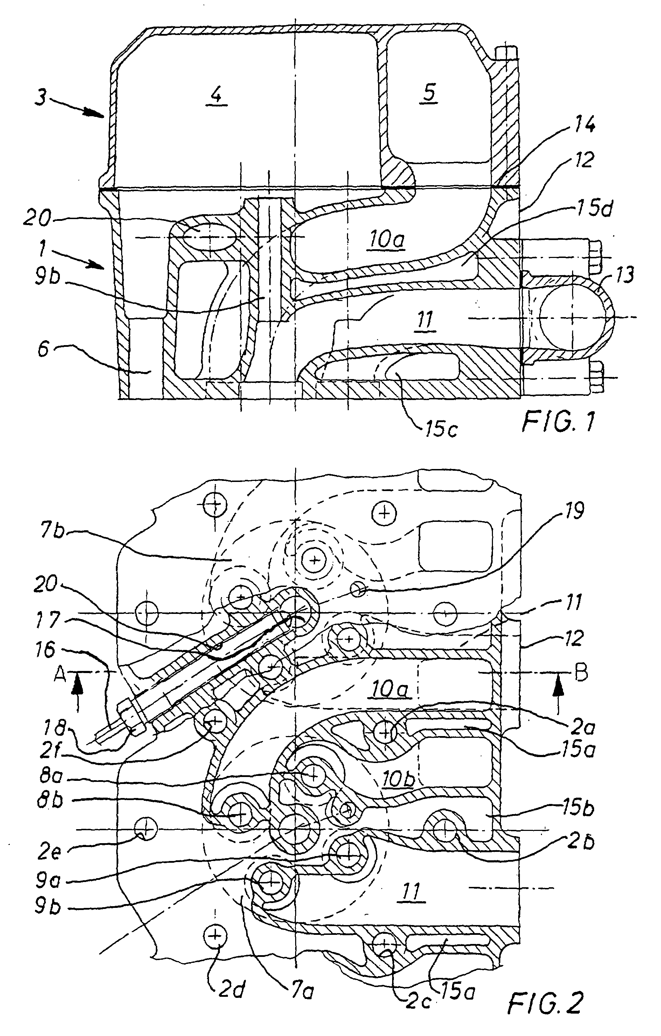

Der Zylinderkopf 1 nach Fig. 1 ist insbesondere als Blockzylinderkopf für eine selbstzündende, mehrzylindrige Reihenbrennkraftmaschine ausgelegt. Der Zylinderkopf 1 wird mit Zylinderkopfschrauben, die durch Zylinderkopfschraubenpfeifen 2a bis 2f geführt sind, auf einem Kurbelgehäuse befestigt. Die Zylinderkopfschraubenpfeifen 2a, 2c, 2d und 2f sind zwischen zwei benachbarten Zylindern 7a, 7b (außer am Ende des Zylinderkopfs) angeordnet, während die Zylinderkopfschraubenpfeifen 2b und 2e im Bereich der Mittelquerachse durch den jeweiligen Zylinderkopf 7a, 7b angeordnet sind. Der Zylinderkopf 1 wird von einer Zylinderkopfabdeckhaube 3 nach oben verschlossen, wobei die Zylinderkopfabdeckhaube 3 in einen Ölraum 4 und einen Verbrennungsluftraum 5 unterteilt ist. Die Trennwand zwischen dem Ölraum 4 und dem Verbrennungsluftraum 5 kann aus akustischen und thermischen Gründen speziell isoliert oder ggf. doppelwandig ausgebildet sein. In dem Ölraum 4 sind insbesondere die Kipphebel zur Betätigung der Einlaßventile und Auslaßventile angeordnet, wobei die Kipphebel über Stoßstangen von der Nockenwelle der Brennkraftmaschine betätigt werden und die Stoßstangen in Stoßstangenräumen 6 durch den Zylinderkopf geführt sind.

in den Zylinderkopf 1 sind oberhalb des jeweiligen Zylinders 7a, 7b Einlaßventilbohrungen 8a, 8b sowie Auslaßventilbohrungen 9a, 9b eingearbeitet. In diese Einlaßventilbohrungen 8a, 8b und Auslaßventilbohrungen 9a, 9b werden vorzugsweise Ventilschaftführungen eingesetzt, in denen die Ventilschäfte der Einlaßventile und Auslaßventile bewegbar sind. Die Einlaßventilbohrungen 8a, 8b sowie die Auslaßventilbohrungen 9a, 9b münden zylinderseitig in Einlaßkanäle 10a, 10b sowie je einen Auslaßkanal 11. Die Auslaßkanäle 11 je Zylinder sind auf kurzem Weg zu einer Längsseitenwand 12 des Zylinderkopfs 1 geführt, wobei die einzelnen Auslaßkanäle 11 des Zylinderkopfs 1 über ein seitlich an die Längsseitenwand 12 angeschraubtes Abgassammelrohr 13 miteinander verbunden sind. Die Einlaßkanäle 10a, 10b eines Zylinders 7a, 7b sind zu der oberen Deckfläche 14 des Zylinderkopfs 1 in einem der Längsseitenwand 12 zugewandten Bereich geführt. Der Einlaßkanal 10a ist im übrigen als Füllungskanal und der Einlaßkanal 10b als Drallkanal ausgebildet. Dabei ist der Einlaßkanal 10b (Drallkanal) konstruktiv so um die Zylinderkopfschraubenpfeife 2a herumgelegt, daß sich dadurch der Dralleffekt ergibt. Der Einlaßkanal 10a (Füllkanal) entspricht annähernd einem 90° Bogen und ist um die andere Seite der Zylinderkopfschraubenpfeife 2a herumgeführt und mündet - wie ausgeführt - auf der oberen Deckfläche 14 im Bereich des neben dem Zylinder 7a liegenden Zylinders 7b oberhalb von dessen Auslaßkanal 11. Die beiden Einlaßkanäle 10a, 10b münden jeweils in den Verbrennungsluftraum 5 der Zylinderkopfabdeckhaube 3.

Der Auslaßkanal 11 ist gegenüber den übrigen Wandungen des Zylinderkopfs 1 und insbesondere auch gegenüber dem Einlaßkanal 10a durch Kühlmittelräume 15a bis 15d, die alle miteinander verbunden sind, thermisch weitgehend isoliert.

Die Einlaßventilbohrungen 8a, 8b und die Auslaßventilbohrungen 9a, 9b sind in Ebenen angeordnet, die vorzugsweise um 30° gedreht zu einer Querebene durch den Zylinderkopf sind. Parallel zwischen diesen beiden so gebildeten Ebenen der Einlaßventile und Auslaßventile ist ein Kanal 20 für eine Einspritzleitung 16 angeordnet, die mit einem in eine Zentralbohrung 17 eingesetzten Einspritzventil zusammenwirkt. Die Einspritzleitung 16 wird, in dem Bereich von dem Kanal 20, mit einem Druckstück von einer in den Zylinderkopf eingeschraubten Befestigungsschraube 18 gegen das Einspritzventil gedrückt. Etwa in Verlängerung des Kanals 20 ist gegenüberliegend im Bereich des jeweiligen Zylinders 7a, 7b eine Glühstiftöffnung 19 zum Einsetzen eines Glühstiftes je Zylinder vorgesehen.

## Patentansprüche

1. Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf abgedeckten Zylinder unter Bildung eines Brennraums bewegbar ist, wobei in dem Zylinderkopf je Zylindereinheit zwei mit Einlaßkanälen verbundene Einlaßventile und zwei mit Auslaßkanälen versehene Auslaßventile sowie ein in den Brennraum mündendes Einspritzventil angeordnet sind,
**dadurch gekennzeichnet, daß** die Auslaßkanäle (11) auf einer Längsseitenwand (12) und die Einlaßkanäle (10a, 10b) auf der oberen Deckfläche (14) in einem der Längsseitenwand (12) zugewandten Bereich des Zylinderkopfs (1) münden.

2. Brennkraftmaschine nach Anspruch 1,
**dadurch gekennzeichnet, daß** die Auslaßkanäle (11) zumindest im Mündungsbereich auf der Längsseitenwand (12) zusammengeführt sind.

3. Brennkraftmaschine nach Anspruch 1 oder 2,
**dadurch gekennzeichnet, daß** die Einlaßkanäle (10a, 10b) voneinander getrennt auf der oberen Deckfläche (14) münden.

4. Brennkraftmaschine nach einem der vorherigen Ansprüche,
**dadurch gekennzeichnet, daß** zumindest einer der Einlaßkanäle (10b) als Drallkanal ausgebildet ist.

5. Brennkraftmaschine nach einem der vorherigen Ansprüche,
**dadurch gekennzeichnet, daß** die Einlaßkanäle (10a, 10b) durch eine Zylinderkopfschraubenpfeife (2a) getrennt sind.

6. Brennkraftmaschine nach einem der vorherigen Ansprüche,
**dadurch gekennzeichnet, daß** der Einlaßkanal (10a) eines ersten Zylinders (7a) oberhalb des Auslaßkanals (11) des benachbarten Zylinders (7b) auf der oberen Deckfläche (14) mündet.

7. Brennkraftmaschine nach einem der vorherigen Ansprüche,
**dadurch gekennzeichnet, daß** die Ventilschaftführungen der Einlaßventile und der Auslaßventile jeweils in einer Ebene angeordnet sind, die um vorzugsweise 30° gedreht zu einer Querebene durch den Zylinderkopf (1) angeordnet sind.

8. Brennkraftmaschine nach einem der vorherigen Ansprüche,
**dadurch gekennzeichnet, daß** die Einlaßkanäle (10a, 10b) und Auslaßkanäle (11) durch zumindest einen Kühlmittelraum (15a, 15b, 15c, 15d) voneinander getrennt sind.

9. Brennkraftmaschine nach einem der vorherigen Ansprüche,
**dadurch gekennzeichnet, daß** das Einspritzventil mit einer zumindest angenähert quer zu der Einspritzventillängsachse angeordneten Einspritzleitung (16) verbindbar ist, die durch einen Kanal (20) in dem Zylinderkopf (1) geführt ist, der auf der zu den Mündungen der Auslaßkanäle (11) gegenüberliegenden Längsseitenwand mündet.

10. Brennkraftmaschine nach Anspruch 9,
**dadurch gekennzeichnet, daß** der Kanal (20) angenähert um den gleichen Winkel wie die Ventilschaftführungen gedreht in den Zylinderkopf (1) eingelassen ist.

## Claims

1. Internal combustion engine with a crankcase, in which a crankshaft is mounted rotatably, on which crankshaft at least one connecting rod carrying a piston is articulated, the piston being moveable in a cylinder covered by a cylinder head, so as to form a combustion space, two inlet valves connected to inlet ducts and two outlet valves provided with outlet ducts and also an injection valve which issues into the combustion space being arranged for each cylinder unit in the cylinder head, **characterized in that** the outlet ducts (11) issue on a longitudinal side wall (12) and the inlet ducts (10a, 10b) issue on the upper covering surface (14) in a region of the cylinder head (1) which faces the longitudinal side wall (12).

2. Internal combustion engine according to Claim 1, **characterized in that** the outlet ducts (11) are led together at least in the region of issue on the longitudinal side wall (12).

3. Internal combustion engine according to Claim 1 or 2, **characterized in that** the inlet ducts (10a, 10b) issue separately from one another on the upper covering surface (14).

4. Internal combustion engine according to one of the preceding claims, **characterized in that** at least one of the inlet ducts (10b) is designed as a swirl duct.

5. Internal combustion engine according to one of the preceding claims, **characterized in that** the inlet ducts (10a, 10b) are separated by means of a cylinder-head screw vent hole (2a).

6. Internal combustion engine according to one of the preceding claims, **characterized in that** the inlet duct (10a) of a first cylinder (7a) issues on the upper covering surface (14) above the outlet duct (11) of the adjacent cylinder (7b).

7. Internal combustion engine according to one of the preceding claims, **characterized in that** the valve-stem guides of the inlet valves and of the outlet valves are arranged in each case in a plane rotated through preferably 30° in relation to a transverse plane through the cylinder head (1).

8. Internal combustion engine according to one of the preceding claims, **characterized in that** the inlet ducts (10a, 10b) and outlet ducts (11) are separated from one another by at least one coolant space (15a, 15b, 15c, 15d).

9. Internal combustion engine according to one of the preceding claims, **characterized in that** the injection valve is connectable to an injection line (16) which is arranged at least approximately transversely to the injection-valve longitudinal axis and which is led, in the cylinder head (1), through a duct (20) which issues on the longitudinal side wall located opposite the issues of the outlet ducts (11).

10. Internal combustion engine according to Claim 9, **characterized in that** the duct (20) is introduced, rotated approximately to the same angle as the valve-stem guides, into the cylinder head (1).

## Revendications

1. Moteur à combustion interne avec un carter de vilebrequin, dans lequel est installé un vilebrequin rotatif, sur lequel est articulée au moins une bielle portant un piston, dans lequel le piston est mobile dans un cylindre couvert par une culasse pour former une chambre de combustion, dans lequel deux soupapes d'admission raccordées à des canaux d'admission et deux soupapes d'échappement raccordées à des canaux d'échappement ainsi qu'une soupape d'injection débouchant dans la chambre de combustion sont disposées par unité de cylindre dans la culasse, **caractérisé en ce que** les canaux d'échappement (11) débouchent dans une paroi latérale longitudinale (12) et les canaux d'admission (10a, 10b) débouchent dans la face supérieure (14) du bloc-moteur dans une région de la culasse (1) tournée vers la paroi latérale longitudinale (12).

2. Moteur à combustion interne suivant la revendication 1, **caractérisé en ce que** les canaux d'échappement (11) sont réunis au moins dans la région de leur embouchure dans la paroi latérale longitudinale (12).

3. Moteur à combustion interne suivant la revendication 1 ou 2, **caractérisé en ce que** les canaux d'admission (10a, 10b) débouchent séparément l'un de l'autre dans la face supérieure (14) du bloc-moteur.

4. Moteur à combustion interne suivant l'une quelconque des revendications précédentes, **caractérisé en ce qu'**au moins un des canaux d'admission (10b) a la forme d'un canal à tourbillon.

5. Moteur à combustion interne suivant l'une ou l'autre des revendications précédentes, **caractérisé en ce que** les canaux d'admission (10a, 10b) sont séparés par un passage de vis de la culasse (2a).

6. Moteur à combustion interne suivant l'une quelconque des revendications précédentes, **caractérisé en ce que** le canal d'admission (10a) d'un premier cylindre (7a) débouche dans la face supérieure (14) du bloc-moteur au-dessus du canal d'échappement (11) du cylindre adjacent (7b).

7. Moteur à combustion interne suivant l'une quelconque des revendications précédentes, **caractérisé en ce que** les guides de tige de soupape des soupapes d'admission et des soupapes d'échappement sont chaque fois disposés dans un plan qui est tourné de préférence de 30° par rapport à un plan transversal de la culasse (1).

8. Moteur à combustion interne suivant l'une quelconque des revendications précédentes, **caractérisé en ce que** les canaux d'admission (10a, 10b) et les canaux d'échappement (11) sont séparés les uns des autres par au moins une chambre d'agent de refroidissement (15a, 15b, 15c, 15d).

9. Moteur à combustion interne suivant l'une quelconque des revendications précédentes, **caractérisé en ce que** la soupape d'injection peut être raccordée à une conduite d'injection (16) disposée au moins à peu près transversalement à l'axe longitudinal de la soupape d'injection, qui est menée par un canal (20) dans la culasse (1), qui débouche dans la paroi latérale longitudinale située à l'opposé des embouchures des canaux d'échappement (11).

10. Moteur à combustion interne suivant la revendication 9, **caractérisé en ce que** le canal (20) est introduit dans la culasse (1) environ avec le même angle que les guides de tige de soupape.
